# EUROPEAN PATENT SPECIFICATION

(11) **EP 2 783 969 B1**
(45) Date of publication and mention of the grant of the patent: **17.07.2019**
(21) Application number: 14161384.4
(22) Date of filing: 25.03.2014
(51) Int. Cl.: B62M 6/45, B62M 6/70, B60L 15/20

(54) **Controller for electric bicycle, power unit for electric bicycle, and electric bicycle**
Steuerung für Elektrofahrrad, Antriebseinheit für Elektrofahrrad und Elektrofahrrad
Contrôleur pour bicyclette électrique, unité de puissance pour bicyclette électrique et bicyclette électrique

(30) Priority: 29.03.2013 JP 2013073226
(43) Date of publication of application: 01.10.2014
(73) Proprietor: Yamaha Hatsudoki Kabushiki Kaisha, Iwata-shi, Shizuoka 438-8501 (JP)
(72) Inventor: Arimune, Nobuyasu, Iwata-shi, Shizuoka 438-8501 (JP); Higashi, Tomoyuki, Iwata-shi, Shizuoka 438-8501 (JP); Kinpara, Yuki, Iwata-shi, Shizuoka 438-8501 (JP)
(74) Representative: Grünecker Patent- und Rechtsanwälte PartG mbB

(56) References cited:
- EP-A1- 0 893 338
- EP-A1- 2 505 477
- JP-A- H06 255 562
- JP-A- H07 187 054
- US-A1- 2013 054 065

## Description

The present invention relates to a controller for an electric bicycle, a power unit for an electric bicycle, and an electric bicycle.

Prior art document US 2013/0054065 A1 discloses a bicycle drive apparatus that includes a bicycle crankset, a bicycle transmission, a drive assistance electric motor and a microcomputer. The microcomputer includes an output control section. The output control section has a first control and a second control that makes an output of the drive assistance electric motor smaller than an output of the drive assistance electric motor occurring during the first control only upon determining a crank arm of the bicycle crankset is positioned within a prescribed range of at least one of a top dead center position and a bottom dead center position of the bicycle crankset. The output control section is configured to vary the output of the drive assistance electric motor according to a pedaling force. The output control section switches from the first control to the second control upon receiving a shift command to shift the transmission.

An electric bicycle that assists driver's pedal torque by controlling an electric motor according to pedal torque that is input to pedals by a driver is known. In such an electric bicycle, a shock is applied to a bicycle body from an electric motor when the electric motor starts to be driven from a stop state.

Further, an electric bicycle disclosed in Japanese Patent Unexamined Publication JP-A-11-11375 performs soft start, which drives an electric motor while an assist ratio is suppressed from a normal assist ratio within 100 milliseconds from the time of the start, thereby the shock is moderated. However, when the soft start is performed, it takes time until the rotation number of the electric motor becomes high. For this reason, the responsiveness of the electric motor is deteriorated.

Then, the electric bicycle of the JP-A-11-11375 performs an excess assist that drives the electric motor at an assist ratio larger than a normal assist ratio within three seconds from the start after performing the soft start, in order to increase the responsiveness of the electric motor. That is, the responsiveness of the electric motor, which has been deteriorated by the soft start, is compensated by the excess assist that is performed after the soft start.

In this way, the electric bicycle of the JP-A-11-11375 achieves the compatibility between the moderation the shock and the improvement in the responsiveness.

It is the object of the present invention to provide a controller for an electric bicycle transmitting motor torque, wherein further moderation of the shock and improvement in the responsiveness is achieved.

According to the present invention said object is solved by a controller for an electric bicycle transmitting motor torque having the features of independent claim 1. Preferred embodiments are laid down in the dependent claims.

Illustrative aspects provides a controller for an electric bicycle, a power unit for an electric bicycle, and an electric bicycle that improve the moderation of the shock generated at the time of the driving of the electric motor and has the improved responsiveness of the electric motor.

According to one illustrative aspect, there is provided a controller for an electric bicycle transmitting motor torque, which is generated by an electric motor, to a wheel through a power transmission member, the controller comprising:
a pedal torque-dependent power supply part that supplies pedal torque-dependent power, which is changed in response to a change of a signal output from a pedal torque detecting part detecting torque input to pedals, to the electric motor;
an acceleration power supply part that supplies acceleration power to the electric motor before the time at which the maximum peak is formed in a signal output from the pedal torque detecting part while pedals make one rotation after torque is input to the pedals, the acceleration power being larger than the pedal torque dependent power which is generated when the maximum peak is formed; and
a moderate power supply part that supplies moderation power to the electric motor before the time at which the maximum peak is formed in the signal output from the pedal torque detecting part while the pedals make one rotation after torque is input to the pedals, and after the time at which the acceleration power is supplied, the moderation power being smaller than the acceleration power.

The time at which the maximum peak is formed in the signal output from the pedal torque detecting part while the pedals make one rotation after torque is input to the pedals is the time at which the driver steps on the pedals with large force. This time is under the circumstances where the driver wants to obtain large driving torque. Accordingly, it is preferable that the electric motor is engaged with the power transmission member at this time so that the electric motor can transmit a driving force to the rear wheel through the power transmission member.

Meanwhile, before the pedals make one rotation after torque is input to the pedals, some time lag occur until the electric motor is engaged with the power transmission member after the start of the operation of the electric motor. Load applied to the electric motor is small in the period of this time lag.

Accordingly, in the electric bicycle, the acceleration power supply part supplies the acceleration power to the electric motor before the time at which the maximum peak is formed in a signal output from the pedal torque detecting part while pedals make one rotation after torque is input to the pedals. The acceleration power is larger than the pedal torque dependent power which is formed when the maximum peak is formed. For this reason, since it is possible to obtain high acceleration of the bicycle by supplying large power to the electric motor during the time lag, it is possible to increase the rotation number of the electric motor in a short time. Accordingly, the responsiveness of the electric motor is improved.

Further, the moderate power supply part supplies moderation power to the electric motor before the time at which the maximum peak is formed in the signal output from the pedal torque detecting part while the pedals make one rotation after torque is input to the pedals, and after the time at which the acceleration power is supplied. The moderation power is smaller than the acceleration power.

Accordingly, when the time lag is ended, high acceleration is not generated. Therefore, when the electric motor is engaged with the power transmission member, a large shock is hardly generated in the bicycle.

In this way, according to the controller for the electric bicycle, the responsiveness of the electric motor is improved and the shock is moderated.

According to the controller for the electric bicycle, the moderate power supply part may supply the moderation power smaller than the pedal torque-dependent power which is generated when the maximum peak is formed.

Accordingly to this configuration, the acceleration of the electric motor which has been increased by the acceleration power is moderated by the moderation power, and then the electric motor engages with the chain while the acceleration is increased again by the pedal torque dependent power. For this reason, the electric motor is smoothly engaged with the chain and the shock is hardly applied to the chain, the shock is further moderated.

According to the controller for the electric bicycle, the moderate power supply part may supply the moderation power corresponding to a signal output from a detecting part detecting the rotation of the power transmission member and a signal output from a detecting part detecting the rotation of the electric motor.

According to the controller for the electric bicycle, the moderate power supply part can supply the moderation power so that relative speed between the electric motor and the power transmission member is low. For this reason, when the electric motor is engaged with a power transmission member such as the chain, it is possible to prevent a large shock from being generated.

According to the controller for the electric bicycle, the acceleration power supply part may supply the acceleration power corresponding to a signal output from a detecting part detecting the rotation of the power transmission member and a signal output from a detecting part detecting the rotation of the electric motor.

According to the controller for the electric bicycle, the acceleration power supply part can supply power to the electric motor so that a relative speed between speed obtained by multiplying the crank rotation number of the crankshaft by a speed reduction ratio and speed obtained by multiplying the motor rotation number of the electric motor by the speed reduction ratio is reduced when the relative speed therebetween is high. Accordingly, it is possible to improve the responsiveness.

According to the controller for the electric bicycle, the acceleration power supply part may perform feedback control. Accordingly, it is possible to quickly and reliably set the rotation number of the electric motor to target rotation number, thus, responsiveness is improved and the shock is moderated.

According to one illustrative aspect, there is provided a power unit for an electric bicycle comprising:
a pedal torque detecting part that detects pedal torque input to pedals;
an electric motor; and
the controller for an electric bicycle that controls power supplied to the electric motor.

According to one illustrative aspect, there is provided an electric bicycle comprising:
the power unit for an electric bicycle; and
a wheel that is driven by the power unit.

### BRIEF DESCRIPTION OF THE DRAWINGS

Fig. 1 is a right side view of an electric bicycle of a first embodiment of the invention.
Fig. 2 is a block diagram of the electric bicycle of Fig. 1.
Fig. 3 is a block diagram of a controller shown in Fig. 1.
Fig. 4 is a flowchart of control that is performed by the controller.
Fig. 5 is a waveform diagram of signals that represent crank rotation number, motor rotation number, motor torque, and pedal torque.
Fig. 6 is a waveform diagram that shows a command current value and a motor line current value.
Fig. 7 is a block diagram of a motor control unit that is provided on an electric bicycle of a second embodiment of the invention.

### DETAILED DESCRIPTION

### < Circumstances of the invention >

It is common in an electric bicycle to generate motor torque according to pedal torque in order to assist pedal torque of a driver. In driving the electric motor, when the motor torque corresponding to the pedal torque is generated by the electric motor, shock is occurred in the bicycle when the electric motor is engaged with a chain.

Then, in the JP-A-11-11375, in order to moderate the shock, in the initial stage of the operation of the electric motor, soft start in which an assist ratio is lower than a normal assist ratio is performed and the electric motor is driven at a low acceleration. Further, after the soft start, excess assist in which the assist ratio is higher than the normal assist ratio is performed to increase the rotation number of the electric motor, thereby, the responsiveness is improved.

However, the present inventors have diligently researched to improve the moderation of the shock at the time of driving the electric motor and to improve the responsiveness of the electric motor significantly, by employing a method different from this method. Then, the present inventors have researched into the transmitting way of the motor torque from the electric motor to the wheel in detail.

As a result, the present inventors have found out that a time lag occurs by all means due to problems of a mechanical element of a power transmission member such as the chain until the electric motor drives the wheel by the chain after the start of the electric motor, before pedals make one rotation after torque is input to the pedals.

For example, gaps are formed between contact portions when a gear and a chain are engaged with each other or between a plurality of members forming a chain. If the gaps are not formed, the gear cannot be smoothly engaged with or separated from the chain and the chain cannot be freely deformed. For this reason, gaps as clearances necessary for the operation of the electric bicycle are formed between these mechanical elements.

However, in order to make the electric motor apply motor torque to the wheel, all the mechanical elements that connect the electric motor with the wheel should be pressed in one direction so that gaps between the mechanical elements or gaps between the contact portions of the mechanical elements are not formed. For this reason, even though the motor torque is generated by the electric motor, it takes time to eliminate these gaps by moving the mechanical elements. Therefore, it is not possible to instantly drive the wheel using the electric motor.

Accordingly, the present inventors has considered to improve the moderation of the shock and the responsiveness by using the time lag.

The present inventors have found out that during the time lag, in fact, the electric motor is not engaged with other mechanical elements. That is, since the electric motor does not come into contact with other members when the electric motor is to be driven, other members are also not moved together by the electric motor. For this reason, it is found that the period of the time lag is a period in which the electric motor is easily accelerated. Accordingly, as described in detail below, the rotation number of the electric motor is rapidly increased in the period of the time lag and the responsiveness is improved. Further, the acceleration of the electric motor is ended in the period of the time lag so that the shock is hardly generated in the bicycle when the electric motor is to be connected to the power transmission member. As a result, the moderation of the shock is improved.

### < First embodiment >

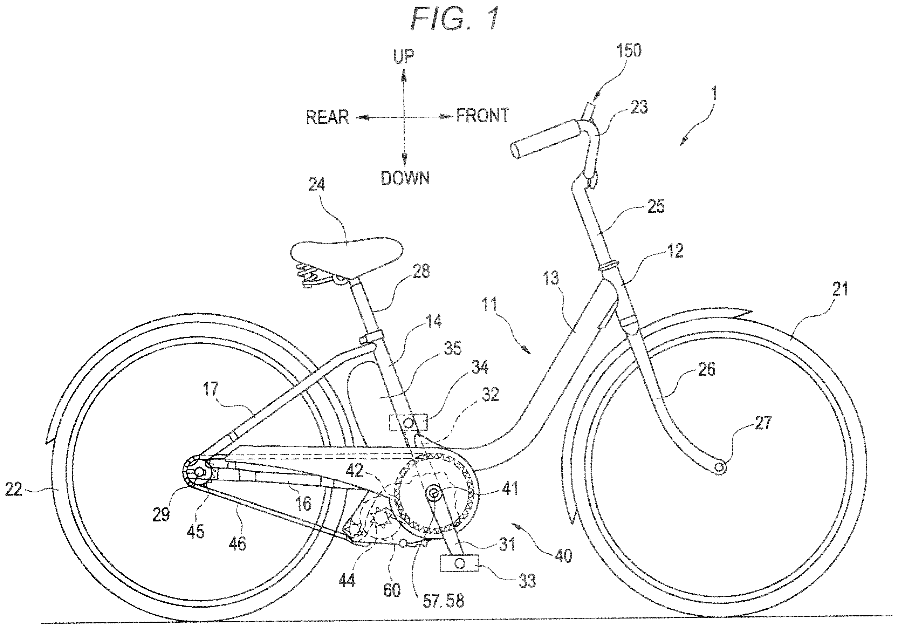

Exemplary embodiments of the invention will now be described with reference to the drawings. A first exemplary embodiment of the invention will be described below with reference to Figs. 1 to 6. The dimensions of elements of each drawing do not truly represent the dimensions of actual elements and ratios of the dimensions of each element.

In the following description, the front, the rear, the left, and the right mean the front, the rear, the left, and the right views from a driver who is seated on a seat 24 of an electric bicycle while gripping a handlebar 23.

### (Entire structure of electric bicycle)

Fig. 1 shows the schematic structure of an electric bicycle according to a first exemplary embodiment.

The electric bicycle is driven by driving torque that is obtained by adding pedal torque, which is generated when a driver steps on pedals 33 and 34, to motor torque that is output from an electric motor 60. The motor torque of the electric motor is assist torque that assists an operation of the driver stepping on the pedals 33 and 34.

As shown in Fig. 1, the electric bicycle includes a vehicle body frame 11 that extends in a longitudinal direction. Further, the electric bicycle includes a front wheel 21, a rear wheel 22, a handlebar 23, a seat 24, and a power unit 40.

The vehicle body frame 11 includes a head pipe 12, a down frame 13, a seat frame 14, a pair of chain stays 16, and a pair of seat stays 17. The head pipe 12 is disposed at the front portion of the electric bicycle. The front portion of the down frame 13, which extends rearward, is connected to the head pipe 12. The seat frame 14 is connected to the rear portion of the down frame 13, and extends upward and obliquely rearward from the rear end portion of the down frame 13.

A handlebar stem 25 is rotatably inserted into the head pipe 12. The handlebar 23 is fixed to the upper end portion of the handlebar stem 25. Front forks 26 are fixed to the lower end portion of the handlebar stem 25. The front wheel 21 is rotatably supported at the lower end portions of the front forks 26 by an axle 27.

A seat pipe 28 is inserted into the cylindrical seat frame 14. The seat 24 is provided at the upper end portion of the seat pipe 28.

The pair of chain stays 16 is provided so as to sandwich the rear wheel 22 from the left and right sides. The pair of chain stays 16 extends toward the center of rotation of the rear wheel 22 from the rear portion of the down frame 13. The pair of seat stays 17 extends toward the center of rotation of the rear wheel 22 from the upper portion of the seat frame 14. The rear wheel 22 is rotatably supported at the rear end portions of the chain stays 16 and the seat stays 17 by a driving shaft 29.

A battery 35, which supplies power to the electric motor 60 of the power unit 40, is disposed in the rear of the seat frame 14. The battery 35 includes a rechargeable battery (not shown) that can be discharged and charged and a battery control unit. The battery control unit controls the charge and discharge of the rechargeable battery, and monitors an output current, residual capacity, and the like of the battery.

The power unit 40 includes a crankshaft 41, a driving sprocket 42, a driven sprocket 45, a chain 46, the electric motor 60, a pedal torque detecting part 57, and a crank rotation detecting part 58.

The crankshaft 41 is rotatably provided at the lower portion of the seat frame 14. The crankshaft 41 is provided so as to extend in a lateral direction. Crank arms 31 and 32 are mounted on both end portions of the crankshaft 41. The pedals 33 and 34 are rotatably mounted on the tips of the crank arms 31 and 32. The pedal torque detecting part 57 detects pedal torque that is input into the crankshaft 41 through the pedals 33 and 34 by a driver. The crank rotation detecting part 58 detects the rotation of the crankshaft 41 when the driver rotates the pedals 33 and 34.

The driving sprocket 42 is mounted on one side of the crankshaft 41. The driving sprocket 42 is rotated together with the crankshaft 41. The driven sprocket 45 is provided coaxially with the driving shaft 29 of the rear wheel 22. The driven sprocket 45 is connected to the rear wheel 22 through a one-way clutch (not shown).

The endless chain 46 is wound around the driving sprocket 42 and the driven sprocket 45. Accordingly, when the driver steps on the pedals 33 and 34, the driving sprocket 42 is rotated. In addition, the rotation of the driving sprocket 42 is transmitted to the driven sprocket 45 through the chain 46, so that the rear wheel 22 is driven.

The electric motor 60 is fixed to the vehicle body frame 11 near the crankshaft 41. An output shaft of the electric motor 60 is provided with an auxiliary sprocket 44. Power is supplied to the electric motor 60 from the battery 35. When power is supplied to the electric motor 60, the electric motor 60 can be driven. The rotation of the electric motor 60 is transmitted to the rear wheel 22 through a power transmission member such as an auxiliary sprocket 44 and a chain 46.

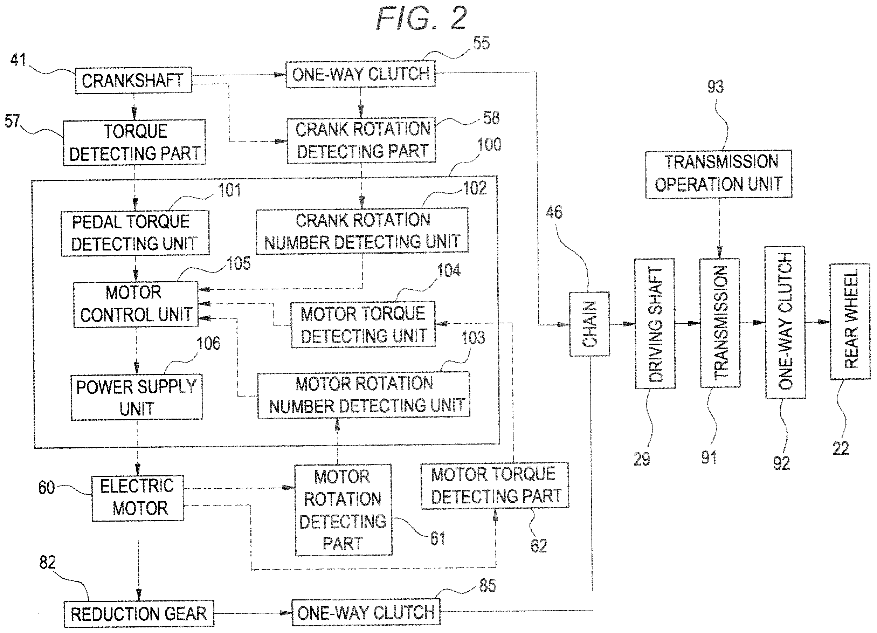

As shown in Fig. 2, a motor rotation detecting part 61 and a motor torque detecting part 62 are connected to the electric motor 60. The motor rotation detecting part 61 detects the rotation of the electric motor 60. The motor torque detecting part 62 detects the motor torque that is generated by the electric motor 60.

The electric bicycle controls the electric motor 60 by a controller 100 (an example of a controller for an electric bicycle), and applies the driving torque, which is obtained by combining the pedal torque with the motor torque, to the wheel. Fig. 2 is a block diagram illustrating the transmission of power and the transfer of a signal in the electric bicycle according to this embodiment.

As shown in Fig. 2, the controller 100 includes a pedal torque detecting unit 101, a crank rotation number detecting unit 102, a motor control unit 105, and a power supply unit 106. Further, the electric bicycle includes a boost switch 56, the pedal torque detecting part 57, and the crank rotation detecting part 58.

### (Power transmission path)

A power transmission path will be described first.

When the driver rotates the crankshaft 41 by stepping on the pedals 33 and 34, the rotation of the crankshaft 41 is transmitted to the chain 46 through the one-way clutch 55. The one-way clutch 55 transmits only the normal rotation of the crankshaft 41 to the chain 46 and does not transmit the reverse rotation of the crankshaft 41 to the chain 46.

The rotation of the chain 46 is transmitted to the driving shaft 29 of the rear wheel 22. The rotation of the driving shaft 29 is transmitted to the rear wheel 22 through a transmission 91 and a one-way clutch 92.

The transmission 91 is a mechanism that can change transmission gear in response to a transmission operation unit 93 operated by a driver.

The one-way clutch 92 transmits the rotation of the driving shaft 29 to the rear wheel 22 only when the rotation speed of the driving shaft 29 is higher than the rotation speed of the rear wheel 22. When the rotation speed of the driving shaft 29 is lower than the rotation speed of the rear wheel 22, the one-way clutch 92 does not transmit the rotation of the driving shaft 29 to the rear wheel 22. Further, the one-way clutch 92 also does not transmit the rotation of the reverse rotation of the rear wheel 22 to the driving shaft 29.

The rotation of the electric motor 60 is transmitted to the rear wheel 22 through the power transmission member. In this embodiment, the power transmission member includes a reduction gear 82, a one-way clutch 85, a chain 46, a driving shaft 29, a transmission mechanism 91, and a one-way clutch 92.

Specifically, the rotation of the electric motor 60 is transmitted to the rear wheel 22 in the following manner.

First, the rotation of the electric motor 60 is transmitted to the one-way clutch 85 through a reduction gear 82. The one-way clutch 85 transmits the rotation, which corresponds to only a direction in which the reduction gear 82 rotates the chain 46 in the normal rotation, to the chain 46 and does not transmit the rotation, which corresponds to a direction in which the reduction gear 82 rotates the chain 46 in the reverse rotation, to the chain 46.

As described above, in the electric bicycle according to this embodiment, the pedal torque input to the crankshaft 41 and the motor torque of the electric motor 60 are combined with each other by the chain 46.

### (Path of signal)

Next, a path of a signal will be described.

When the driver rotates the crankshaft 41, the pedal torque detecting part 57 provided on the vehicle generates a signal corresponding to the pedal torque that is input to the crankshaft 41. The pedal torque detecting part 57 inputs the signal to the pedal torque detecting unit 101.

The pedal torque detecting unit 101 converts the signal, which is input from the pedal torque detecting part 57, into the pedal torque that is applied to the pedals 33 and 34 by the driver. The pedal torque detecting unit 101 inputs the value of the pedal torque to the motor control unit 105. The pedal torque is a value that periodically changes.

The crank rotation detecting part 58 is a sensor that detects the phase of the crankshaft 41. The crank rotation detecting part 58 generates a signal corresponding to the phase of the crankshaft 41. The crank rotation detecting part 58 inputs the signal to the crank rotation number detecting unit 102.

The crank rotation number detecting unit 102 converts the signal, which is input from the crank rotation detecting part 58, into crank rotation speed, which is applied to the pedals 33 and 34 by the driver, by the time differentiation of the phase information of the crankshaft 41 that is input from the crank rotation detecting part 58. The crank rotation number detecting unit 102 inputs the crank rotation speed to the motor control unit 105.

A signal, which is output from the motor rotation detecting part 61, is input to a motor rotation number detecting unit 103. The motor rotation number detecting unit 103 calculates the motor rotation number of the electric motor 60 from the signal that is output from the motor rotation detecting part 61. The motor rotation number detecting unit 103 inputs this motor rotation number to the motor control unit 105.

A signal, which is output from the motor torque detecting part 62, is input to a motor torque detecting unit 104. The motor torque detecting unit 104 calculates the motor torque of the electric motor 60 from the signal that is output from the motor torque detecting part 62. The motor torque detecting unit 104 inputs the motor torque to the motor control unit 105.

The motor control unit 105 calculates a command value on the basis of various input signals, and outputs the command value to the power supply unit 106. The power supply unit 106 supplies power, which corresponds to the command value, to the electric motor 60.

### (Control of motor control unit)

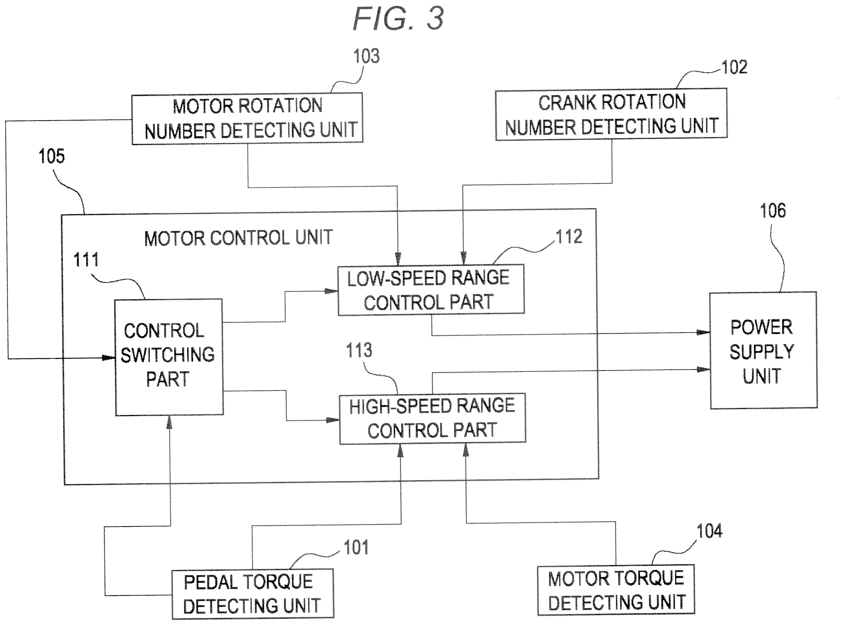

Fig. 3 is a block diagram of the motor control unit 105. As shown in Fig. 3, the motor control unit 105 includes a control switching part 111, a low-speed range control part 112, and a high-speed range control part 113.

The control switching part 111 switches the operations of the low-speed range control part 112 and the high-speed range control part 113 according to the motor rotation number M. When the driver steps on the pedals 33, 34 and pedal torque Tp is input to the crankshaft 41, the control switching part 111 starts to operate.

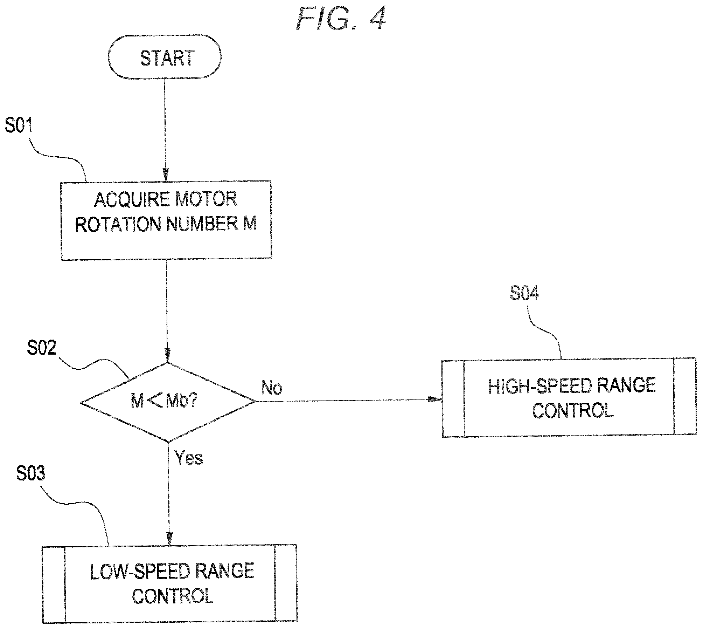

Fig. 4 is a flowchart of control that is performed by the control switching part 111. As shown in Fig. 4, the control switching part 111 acquires the motor rotation number M of the electric motor 60 from the motor rotation number detecting unit 103 (Step S01). The control switching part 111 compares the acquired motor rotation number M with switching rotation number Mb (Step S02). The switching rotation number Mb has an arbitrary fixed value.

If the motor rotation number M is lower than the switching rotation number Mb (Yes in Step S02), the control switching part 111 performs low-speed range control by operating only the low-speed range control part 112 (Step S03). Meanwhile, when the motor rotation number M is equal to or higher than the switching rotation number Mb (No in Step S02), the control switching part 111 performs high-speed range control by operating only the high-speed range control part 113 (Step S04).

### (Low-speed range control)

The low-speed range control part 112 acquires the motor rotation number M from the motor rotation number detecting unit 103. Next, the low-speed range control part 112 acquires the crank rotation number C from the crank rotation number detecting unit 102. After that, the low-speed range control part 112 compares the motor rotation number M with the crank rotation number C, and calculates target motor rotation number at which the electric motor 60 is driven so that relative speed between the electric motor 60 and the crankshaft 41 becomes zero on the basis of PID control. Specifically, the low-speed range control part 112 calculates the target motor rotation number so that relative speed between the speed of the chain 46 obtained by multiplying the crank rotation number C by a speed reduction ratio and the speed of the chain 46 obtained by multiplying the motor rotation number M by the speed reduction ratio becomes zero. The low-speed range control part 112 calculates a command value according to the target motor rotation number, and output the command value to the power supply unit 106. The power supply unit 106 supplies power, which corresponds to the command value, to the electric motor 60.

In this embodiment, a command value is determined according to the motor rotation number M of the electric motor 60, the rotation number of the electric motor 60 is acquired again after the electric motor 60 is driven by the power corresponding to the command value, and the next target motor rotation number is obtained. In this embodiment, the low-speed range control part 112 performs feedback control in this way. Accordingly, it is possible to quickly and reliably set the rotation number of the electric motor 60 to target rotation number.

### (High-speed range control)

When the power continues to be supplied by the low-speed range control part 112 and the rotation number of the electric motor 60 is increased, the motor rotation number M becomes equal to or higher than the switching rotation number Mb. Then, returning to Fig. 4, the control switching part 111 determines that the motor rotation number M becomes equal to or higher than the switching rotation number Mb (No in Step S02). After that, the control switching part 111 stops the operation of the low-speed range control part 112 and operates the high-speed range control part 113.

First, the high-speed range control part 113 acquires the motor torque Tm from the motor torque detecting unit 104. In addition, the high-speed range control part 113 acquires the pedal torque Tp from the pedal torque detecting unit 101. The high-speed range control part 113 calculates target motor torque Tt by multiplying the pedal torque Tp by an assist ratio k.

The assist ratio k may be a value that can be selected by a driver. For example, a strong assist state in which the assist ratio k is large and a weak assist state in which the assist ratio is small may be selected by the assist changeover switch or the like.

The high-speed range control part 113 calculates a command value based on the calculated target motor torque Tt. The high-speed range control part 113 outputs this command value to the power supply unit 106. The power supply unit 106 supplies power to the electric motor 60 on the basis of this command value. The high-speed range control part 113 determines a command value according to the pedal torque Tp in this way. For this reason, power, which is output on the basis of the command value output from the high-speed range control part 113, changes according to the change of a signal that is output from the pedal torque detecting part 57 detecting the pedal torque input to the pedals 33, 34.

### (Description of output signal)

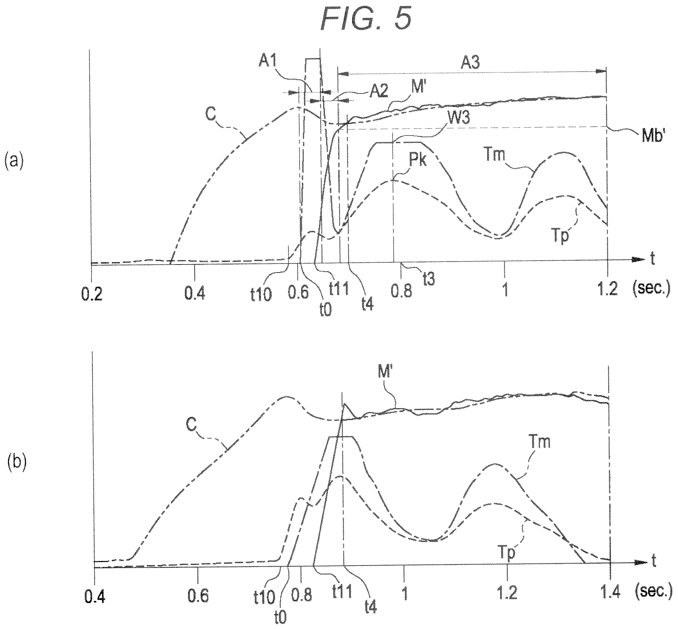

Fig. 5 is a waveform diagram of signals that represent the crank rotation number C, motor rotation number M', the motor torque Tm, and the pedal torque Tp. Meanwhile, since the motor torque Tm is proportional to the power supplied to the electric motor 60 in Fig. 5, the motor torque Tm of Fig. 5 can be equated with power that is supplied to the electric motor 60. A horizontal axis of Fig. 5 represents elapsed time [sec]. A vertical axis of Fig. 5 represents the rotation number [rpm] in the same scale with respect to the crank rotation number C and the motor rotation number M'.

The motor rotation number M' shown in Fig. 5 is obtained by converting the motor rotation number M, which is calculated by the motor rotation number detecting unit 103, into the rotation number of the crankshaft 41. As described with reference to Fig. 2, the electric motor 60 is connected to the driving sprocket 42 of the crankshaft 41 through the reduction gear 82, the one-way clutch 85, the auxiliary sprocket 44, the chain 46, and the one-way clutch 55. The radii of the respective members are different from each other. For this reason, even though the rotation number of each member is merely seen, it is difficult to determine whether or not a difference in relative speed between the respective members 41 and 60 is generated.

Then, in Fig. 5, the motor rotation number M' is calculated from the motor rotation number M in consideration of gear ratios of each member. The rotation number at which the electric motor 60 rotates the chain 46 and the rotation number at which the crankshaft 41 rotates the chain 46 correspond to each other at a point where the motor rotation number M' and the crank rotation number C correspond to each other.

Further, in Fig. 5, the crankshaft 41 is engaged with the chain 46 at a time t10, the supply of power to the electric motor 60 is started at a time t0, the rotation of the electric motor 60 is started at a time t11, and the electric motor 60 is engaged with the chain 46 at a time t4.

Furthermore, (a) of Fig. 5 is a waveform diagram of signals that are output from the electric bicycle according to the above-mentioned embodiment. (b) of Fig. 5 is a waveform diagram of signals that are output from an electric bicycle according to a reference example.

### (Comparison with reference example)

As shown in (b) of Fig. 5, the electric bicycle according to the reference example does not include an acceleration power supply part and an moderate power supply part, and the motor torque Tm has a value that is obtained by multiplying the pedal torque Tp by the assist ratio k in the entire area.

As shown in (b) of Fig. 5, in the electric bicycle according to the reference example, low power is supplied to the electric motor according to low pedal torque Tp in the initial stage of the operation of the electric motor. For this reason, the acceleration of the motor rotation number M' of the electric motor is low, and the gradient of the motor rotation number M' is gentle in (b) of Fig. 5. Accordingly, the responsiveness of the electric motor is not so high.

In addition, when the pedal torque Tp is high, the motor rotation number M' matches with the crank rotation number C, and the electric motor engages with the power transmission member such as the chain. For this reason, when the electric motor engages with the power transmission member, large motor torque is generated in the electric motor and large motor torque is transmitted to the chain. Accordingly, large shock is applied to the bicycle.

In contrast, as described in detail below, according to the electric bicycle of this embodiment, the responsiveness of the electric motor is improved and also the shock generated when the electric motor is engaged with the power transmission member is moderated.

### (Pedal torque-dependent power)

As shown in (a) of Fig. 5, according to the electric bicycle of this embodiment, while the pedals 33, 34 make one rotation after the driver inputs pedal torque to the pedals 33, 34, a peak Pk (maximum peak) of which signal strength is maximum is formed in the signal that is output from the pedal torque detecting part. The peak Pk is formed while the driver moves the pedals 33, 34 to the bottom dead center from the top dead center. A time at which the peak Pk is formed is denoted by t3.

At the time t3, the motor rotation number M' is higher than switching rotation number Mb'. Meanwhile, the switching rotation number Mb' is also a value that is converted into the rotation number of the crankshaft 41 from the above-mentioned switching rotation number Mb. For this reason, in an area A3 which includes the time t3 and in which the motor rotation number M' is higher than the switching rotation number Mb', the power is supplied to the electric motor 60 according to the command value which is output from the high-speed range control part 113. As described below, the power generated by the high-speed range control part 113 changes according to the change of a signal that is output from the pedal torque detecting part 57 detecting the pedal torque input to the pedals 33, 34. For this reason, in the area A3, the motor torque Tm changes according to the change of the pedal torque Tp.

That is, in this embodiment, the high-speed range control part 113 functions as a pedal torque-dependent power supply part that supplies the pedal torque-dependent power, which changes according to the change of the signal output from the pedal torque detecting part 57 detecting the pedal torque input to the pedals 33, 34, to the electric motor 60.

Thus, the power output in the area A3 is referred to as pedal torque-dependent power in the following description. Further, a value of the pedal torque-dependent power, which is supplied to the electric motor 60 at the time t3 at which the peak Pk is formed, is defined as W3.

As shown in (a) of Fig. 5, power, which is larger than the pedal torque-dependent power W3 supplied at the time t3 at which the peak Pk is formed, is supplied to the electric motor 60 in an area A1 prior to the time t3 at which the peak Pk is formed. In addition, as shown in (a) of Fig. 5, the motor torque Tm generated in an area A2 (an area between the area A1 and the area A3 in (a) of Fig. 5) is smaller than the motor torque Tm which is generated in the area A1. The area A2 is an area which is prior to the time t3 at which the peak Pk is formed and subsequent to the supply of large power. That is, the power, which is smaller than the power supplied in the area A 1, is supplied to the electric motor 60 in the area A2.

### (Acceleration power)

In the area of the area A1 and the area A2, the motor rotation number M' is lower than the switching rotation number Mb'. Therefore, in the areas A1, A2, the power is supplied to the electric motor 60 according to a command value that is output from the low-speed range control part 112.

As shown in Fig. 5, when the driver inputs the pedal torque Tp and the low-speed range control part 112 starts to operate (time t0), the crank rotation number C is already high. Thus, a large difference occurs between the crank rotation number C and the motor rotation number M' of the electric motor 60. Accordingly, in the initial stage of the operation of the electric motor 60, the low-speed range control part 112 outputs large power to the electric motor 60 and the electric motor 60 is driven at a high acceleration.

As described above, in the area A1 prior to the time at which the maximum peak of a signal (Tp) output from the pedal torque detecting part 57 while the pedals make one rotation after torque is input to the pedals is formed, the low-speed range control part 112 functions as an acceleration power supply part. The low-speed range control part 112 supplies the acceleration power, which is larger than the pedal torque-dependent power W3 generated when the peak Pk is formed, to the electric motor 60.

### (moderation power)

Since large power is supplied from the acceleration power supply part until a constant period passes from the time t0, the electric motor 60 is driven at a high acceleration. For this reason, the rising of the motor rotation number M' becomes steep as shown in Fig. 5. In addition, when the motor rotation number M' approaches the crank rotation number C, now the low-speed range control part 112 controls the power of the electric motor 60 according to PID control so that the acceleration of the motor rotation number M' is moderate.

For this reason, before the time t3 at which the maximum peak of the signal (Tp) output from the pedal torque detecting part while the pedals make one rotation after torque is input to the pedals is formed and after the supply of acceleration power, the low-speed range control part 112 functions as the moderate power supply part. The low-speed range control part 112 supplies the moderation power, which is smaller than the acceleration power, to the electric motor 60.

### (Advantages)

The time at which the maximum peak Pk is formed in the signal Tp output from the pedal torque detecting part 57 while the pedals 33, 34 make one rotation after torque is input to the pedals 33, 34 is the time at which the driver steps on the pedals 33, 34 by a large force. This time is under the circumstances where the driver wants to obtain large driving torque. Accordingly, it is preferable that the electric motor 60 is engaged with the chain 46 at this time so that the electric motor 60 can transmit a driving force to the rear wheel 22 through the power transmission member.

Meanwhile, as described above, before the pedals 33, 34 make one rotation after torque is input to the pedals 33, 34, the time lag occurs until the electric motor is engaged with the power transmission member after the start of the operation of the electric motor. In this time lag, the load applied to the electric motor 60 is small.

In (a) of Fig. 5, this time lag occurs between the time t0 at which the pedal torque Tp becomes equal to or larger than a predetermined value and power starts to be supplied to the electric motor 60 and the time t4 at which the electric motor 60 is engaged with the chain 46 and the motor rotation number M' corresponds to the crank rotation number C.

In the electric bicycle according to this embodiment, the acceleration power supply part (low-speed range control part 112) supplies power, which is larger than the pedal torque-dependent power W3 output from the pedal torque-dependent power supply part (high-speed range control part 113) when the peak Pk is formed, to the electric motor 60 before the time t3 at which the maximum peak Pk is formed in the signal output from the pedal torque detecting part 57 while the pedals 33, 34 make one rotation after torque is input to the pedals 33, 34.

Since it is possible to obtain high acceleration by supplying large power to the electric motor 60 during the time lag that occurs between the time t0 and the time t4, it is possible to increase the rotation number of the electric motor 60 in a short time. Accordingly, the responsiveness of the electric motor 60 is improved.

Further, the moderate power supply part (low-speed range control part 112) supplies moderate power, which is smaller than the acceleration power, to the electric motor 60 before the time t3 at which the maximum peak Pk is formed in the signal output from the pedal torque detecting part 57 while the pedals 33, 34 make one rotation after torque is input to the pedals 33, 34 and after the acceleration power supply part (low-speed range control part 112) supplies acceleration power.

Accordingly, when the time lag occurring between the time t0 and the time t4 is ended, the supply of large power is stopped and small power is supplied. Therefore, when the electric motor 60 is engaging with the chain 46, large torque is not generated in the electric motor 60 and the large motor torque is not transmitted to the chain 46. For this reason, a large shock is hardly generated in the bicycle.

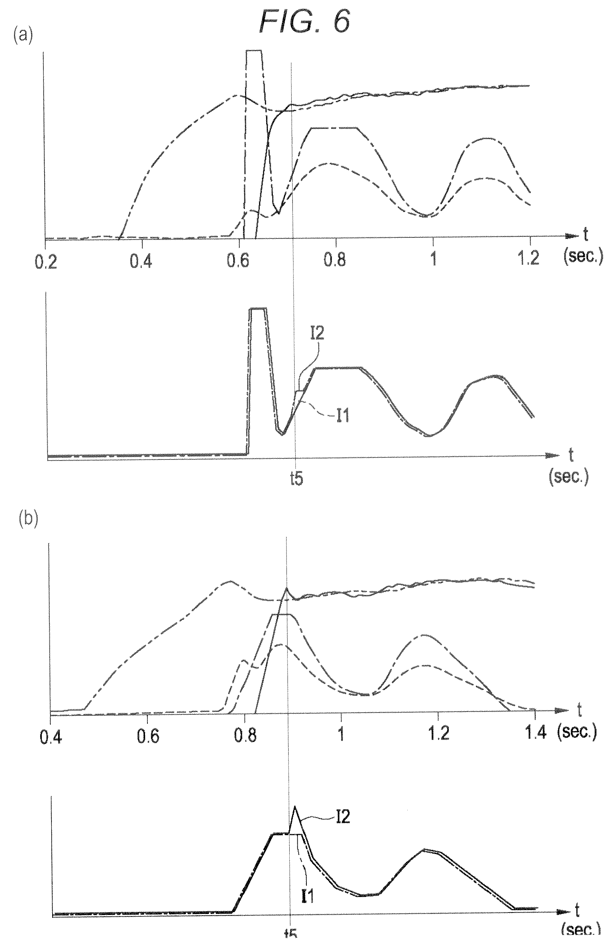

Fig. 6 is a waveform diagram that shows a command current value corresponding to a command value output to the power supply unit 106 from the motor control unit 105 and a motor line current value of current actually flowing in the electric motor. (a) of Fig. 6 shows an example of the electric bicycle according to this embodiment, and (b) of Fig. 6 shows an example of the electric bicycle according to the reference example. In all of Figs. 6a and 6b, an upper diagram shows the various signals that have been already shown in Fig. 5 and a lower diagram shows the changes of a command current value I1 and a motor line current value I2 at the elapsed time. Meanwhile, effective values are plotted as the current values.

Both in the electric bicycles according to the embodiment and the reference example, the command current value and the motor line current value correspond to each other except when the electric motor is engaged with the chain (time t5).

In the electric bicycle according to the reference example, the electric motor bumps into the chain at a high relative speed when the electric motor is engaged with the chain (time t5). Accordingly, the rotation number of the electric motor suddenly changes. For this reason, when the electric motor is engaged with the chain, motor line current significantly deviates from the command current value as shown in (b) of Fig. 6.

In contrast, in the electric bicycle according to this embodiment, the electric motor 60 is connected to the chain 46 at a low relative speed when the electric motor 60 is engaged with the chain 46 (time t5). Accordingly, the rotation number of the electric motor 60 does not significantly changes. For this reason, even when the electric motor 60 is engaged with the chain 46, motor line current does not significantly deviate from the command current value as shown in (a) of Fig. 6. According to the electric bicycle of this embodiment, it is possible to confirm that a shock is moderated even from the result of the measurement of the motor line current value as described above.

### (Comparison with JP-A-11-11375)

Meanwhile, the electric bicycle of JP-A-11-11375 performs soft start in the initial stage of the operation start of the electric motor and then performs excess assist. The time lag occurs in the initial stage of the operation start of the electric motor, and the electric bicycle of JP-A-11-11375 does not use this time lag. Rather, since the excess assist increasing an assist ratio is performed in the late stage, there is a concern that a large shock is generated when the electric motor is engaged with the chain. Further, if the time of the soft start is lengthened for the suppression of this large shock, sufficient assist power is not obtained. Accordingly, the electric bicycle of JP-A-11-11375 has a limitation in obtaining the compatibility of both the responsiveness and the moderation of the shock.

In contrast, the electric bicycle according to this embodiment is entirely different from JP-A-11-11375 in that the responsiveness and the moderation of the shock are significantly improved by using the phenomenon of the time lag.

In this embodiment, the moderate power supply part (low-speed range control part 112) supplies power, which is smaller than the pedal torque-dependent power W3 generated when the peak Pk is formed, to the electric motor 60. Accordingly, the acceleration of the electric motor 60 which has been accelerated by the acceleration power is reduced by the moderation power, and then the electric motor 60 engages with the chain 46 the acceleration is increased again by the pedal torque dependent power. For this reason, since the electric motor 60 is smoothly engaged with the chain 46 so as not to apply the shock to the chain 46 when being engaged with the chain 46, the shock is further moderated.

In this embodiment, as shown in Fig. 2, the moderate power supply part (low-speed range control part 112) determines the moderation power according to the signal output from the crank rotation detecting part 58, which is a signal output from a detecting part detecting the rotation of the power transmission member, and the signal that is output from the motor rotation detecting part 61 detecting the rotation of the electric motor 60.

Accordingly, the moderate power supply part can supply moderation power so that the relative speed between the electric motor 60 and the power transmission member is low. For this reason, when the electric motor 60 is engaged with a power transmission member such as the chain 46, a large shock is not generated.

In this embodiment, the acceleration power supply part determines the acceleration power according to the signal output from the crank rotation detecting part 58 detecting the rotation of the crankshaft 41, which is a power transmission member, and the signal that is output from the motor rotation detecting part 61 detecting the rotation of the electric motor 60. For this reason, when the relative speed between the crankshaft 41 and the electric motor 60 is high, the acceleration power supply part can supply power to the electric motor 60 so that a difference in speed between the crankshaft 41 and the electric motor 60 is reduced. Accordingly, it is possible to improve the responsiveness.

### (Advantage caused by speed control)

Further, according to the electric bicycle of this embodiment, the speed of the electric motor 60 is controlled by the low-speed range control part 112 in the initial stage of the operation of the electric motor 60. Since a load is small in the initial stage of the operation of the electric motor, the load of the electric motor 60 is small. For this reason, it is possible to quickly control the speed of the electric motor 60 by power, which is supplied to the electric motor 60, without the influence of an inertial force. Accordingly, it is possible to drive the electric motor 60 at a high speed in a short time by controlling the speed of the electric motor 60 in the initial stage of the operation, and to suppress the acceleration of the electric motor. Accordingly, it is possible to achieve the compatibility of both the responsiveness and the moderation of the shock at a high level.

### < Second embodiment >

An example in which the low-speed range control part 112 functions as the acceleration powersupply part and the moderate power supply part and the high-speed range control part 113 functions as the pedal torque-dependent power supply part has been described in the above-mentioned embodiment.

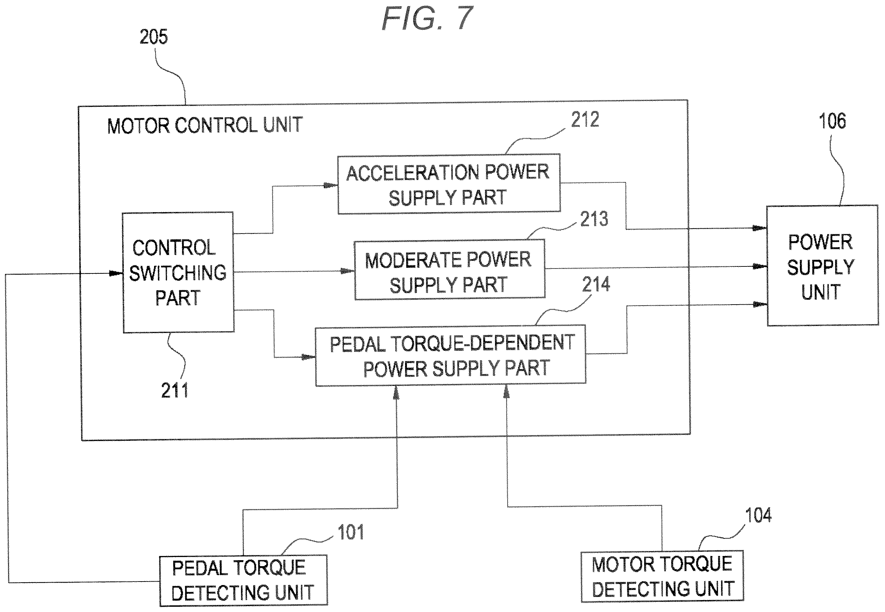

Fig. 7 is a block diagram of a motor control unit that is provided on an electric bicycle according to a second embodiment of the invention. Meanwhile, portions of the second embodiment, which are common to the first embodiment, are denoted by common reference numerals, and the description thereof will be omitted.

As shown in Fig. 7, a motor control unit 205 includes a control switching part 211, an acceleration power supply part 212, a moderate power supply part 213, and a pedal torque-dependent power supply part 214.

The pedal torque-dependent power supply part 214 calculates a command value by multiplying a signal, which is output from the pedal torque detecting part 57, by an assist ratio k1, and supplies power to the electric motor 60 from the power supply unit 106 according to the command value. That is, the pedal torque-dependent power, which is supplied to the electric motor 60 by the pedal torque-dependent power supply part 214, changes according to the signal that is output from the pedal torque detecting part 57 detecting pedal torque input to the pedals 33, 34.

The acceleration power supply part 212 supplies the acceleration power, which is larger than the pedal torque-dependent power, to the electric motor 60. In this embodiment, the acceleration power supply part 212 calculates a command value by multiplying pedal torque Tp by an assist ratio k2, and supplies the power to the electric motor 60 from the power supply unit 106 according to the command value. In this case, the assist ratio k2 is set to a value that is larger than the assist ratio k1 set in the pedal torque-dependent power supply part 214.

The moderate power supply part 213 supplies the moderation power, which is smaller than acceleration power, to the electric motor 60. For example, the moderate powersupply part 213 calculates a command value by multiplying the pedal torque Tp by an assist ratio k3, and supplies the power to the electric motor 60 from the power supply unit 106 according to the command value. In this case, the assist ratio k3 is set to a value that is smaller than the assist ratio k2 set in the acceleration power supply part 212.

The control switching part 211 counts elapsed time s [sec] from when an output signal of the pedal torque detecting part 57 becomes equal to or larger than a specific value. The control switching part 211 switches the operations of the acceleration power supply part 212, the moderate power supply part 213, and the pedal torque-dependent power supply part 214 according to the elapsed time s.

In this embodiment, the control switching part 211 operates only the acceleration power supply part 212 when time corresponding to a first threshold s1 has passed from the time at which the output signal of the pedal torque detecting part 57 is changed to a specific size or more from 0 (s0).

When time corresponding to a second threshold s2, which is longer than the time corresponding to the first threshold s1, has passed, the control switching part 211 stops the operation of the acceleration power supply part 212 and operates only the moderate power supply part 213.

In addition, when time corresponding to a third threshold s3, which is longer than the time corresponding to the second threshold s2, has passed, the control switching part 211 stops the operation of the moderate power supply part 213 and operates only the pedal torque-dependent power supply part.

Incidentally, the length of the time lag, which is generated until the electric motor applies the motor torque to the wheel from the stop state of the electric motor, depends on the gaps between the mechanical elements. For this reason, it is possible to grasp the length of the time lag in advance according to the size of the set gap. Then, in this embodiment, the above-mentioned first, second, and third thresholds s1, s2, and s3 are set according to the length of the time lag that has been known in advance so that the acceleration of the electric motor is completed within the period of the time lag.

Accordingly, before the time at which the maximum peak is formed in the signal(Tp) output from the pedal torque detecting part 57 while the pedals make one rotation after torque is input to the pedals 33, 34, the acceleration power supply part 212 can supply power, which is larger than the pedal torque-dependent power generated when the peak is formed. Therefore, it is possible to drive the electric motor 60 at a high speed in a short time, so that the responsiveness is improved.

Further, before the time at which the maximum peak of the signal (Tp) output from the pedal torque detecting part 57 while the pedals make one rotation after torque is input to the pedals 33, 34 is formed and after the supply of acceleration power, the moderate power supply part 213 can supply power, which is smaller than the acceleration power, to the electric motor 60. Accordingly, a shock is reduced.

### < Third embodiment >

Alternatively, an enbodiment may have the following configurations.

In the second embodiment, an example in which the control switching part 211 switches the operations of the acceleration power supply part 212, the moderate power supply part 213, and the pedal torque-dependent power supply part 214 according to the elapsed time s has been described, but the teaching is not limited to this example. For example, the operations of the acceleration power supply part 212, the moderate power supply part 213, and the pedal torque-dependent power supply part 214 may be switched according to the pedal torque.

For example, in an area in which the signal (Tp) output from the pedal torque detecting part 57 is larger than a predetermined lower limit and smaller than a first threshold Tp1, only the acceleration power supply part 212 may be operated and the acceleration power may be supplied to the electric motor 60.

Moreover, in an area in which the signal (Tp) output from the pedal torque detecting part 57 is equal to or larger than the first threshold Tp1 and smaller than a second threshold Tp2 (the second threshold Tp2 is larger than the first threshold Tpl), only the moderate power supply part 213 may be operated and the moderation power may be supplied to the electric motor 60.

In addition, in an area in which the signal (Tp) output from the pedal torque detecting part 57 is equal to or larger than the second threshold Tp2, only the pedal torque-dependent power supply part 214 may be operated and the pedal torque-dependent power may be supplied to the electric motor 60.

When the driver steps on the pedals and the electric motor 60 starts to rotate, the electric motor 60 is not engaged with the power transmission member such the chain 46 or the like in an initial stage in which the pedal torque is small. Accordingly, large acceleration power is supplied to the electric motor 60 in the area in which the pedal torque is small, so that the responsiveness of the electric motor is improved.

Further, in an area in which the pedal torque is equal to or larger than the first threshold Tp1 and smaller than the second threshold Tp2, where the driver further steps on the pedals and the electric motor 60 is not yet engaged with the chain 46, the moderation power which is smaller than the acceleration power is supplied to the electric motor 60. Thus, a shock is moderated.

In this way, even in the electric bicycle according to this embodiment, it is possible to drive the electric motor at a high acceleration and to drive the electric motor at a high speed within the period of the time lag of the time at which the maximum peak is formed in the signal output from the pedal torque detecting part 57 while the pedals make one rotation after torque is input to the pedals, and to end the acceleration of the electric motor within the period of the time lag. Accordingly, the responsiveness of the electric motor 60 is improved and the shock is moderated.

### < Modification >

For example, in the second and third embodiments, an example in which the acceleration power and the moderation power change according to the change of the pedal torque has been described, but the teaching is not limited to these examples. For example, the acceleration power supply part and the moderate power supply part may be adapted to supply constant power that does not change according to the change of the pedal torque.

Further, the chain 46 has been described as an example of the power transmission member in the above description, but the teaching is not limited to this example. For example, in an electric bicycle in which an auxiliary sprocket of an electric motor is connected to a driving sprocket of a crankshaft through a gear without a chain, the auxiliary sprocket, the gear, and the driving sprocket also serve as the power transmission member. Alternatively, when the electric motor is connected to an axle of a rear wheel, the axle of the rear wheel serves as the power transmission member. The power transmission member of the present teaching is a mechanical element to which the electric motor transmits motor torque.

### [Description of Reference Numerals and Signs]

35: battery
41: crankshaft
57: pedal torque detecting part
58: crank rotation detecting part
60: electric motor
61: motor rotation detecting part
62: motor torque detecting part
100: controller
101: pedal torque detecting unit
102: crank rotation number detecting unit
103: motor rotation number detecting unit
104: motor torque detecting unit
105, 205: motor control unit
106: power supply unit
111, 211: control switching part
112: low-speed range control part (acceleration power supply part, moderate powersupply part)
113: high-speed range control part (pedal torque-dependent power supply part)
212: acceleration power supply part
213: moderate power supply part
214: pedal torque-dependent power supply part

## Claims

1. A controller for an electric bicycle transmitting motor torque, which is generated by an electric motor (60), to a wheel (22) through a power transmission member, wherein a time lag occurs to eliminate gaps by moving mechanical elements of the power transmission member after start of the electric motor (60), the controller comprising:
a pedal torque-dependent power supply part (113,214) adapted to supply pedal torque-dependent power, which is changed in response to a change of a signal output from a pedal torque detecting part (57) detecting torque input to pedals (33,34), to the electric motor (60);
an acceleration power supply part (112,212) adapted to supply acceleration power to the electric motor (60) in a time area (A1) after start of the electric motor (60) and before the time (t3) at which the maximum peak (Pk) is formed in a signal output from the pedal torque detecting part (57) while pedals (33,34) make one rotation after torque is input to the pedals (33,34), the acceleration power being larger than the pedal torque dependent power which is generated when the maximum peak (Pk) is formed; and
a moderate power supply part (112,213) adapted to supply moderation power to the electric motor (60) in a time area (A2) after the time area (A1) at which the acceleration power is supplied and before the time (t3) at which the maximum peak (Pk) is formed in the signal output from the pedal torque detecting part (57) while the pedals (33,34) make one rotation after torque is input to the pedals (33,34), the moderation power being smaller than the acceleration power.

2. A controller for an electric bicycle according to claim 1, wherein the moderate power supply part (112,213) is adapted to supply the moderation power smaller than the pedal torque-dependent power which is generated when the maximum peak (Pk) is formed.

3. A controller for an electric bicycle according to claim 1 or 2, wherein the moderate power supply part (112,213) is adapted to supply the moderation power corresponding to a signal output from a detecting part (58) detecting the rotation of the power transmission member and a signal output from a detecting part (61) detecting the rotation of the electric motor (60).

4. A controller for an electric bicycle according to any one of claims 1 to 3, wherein the acceleration power supply part (112,212) is adapted to supply the acceleration power corresponding to a signal output from a detecting part (58) detecting the rotation of the power transmission member and a signal output from a detecting part (61) detecting the rotation of the electric motor (60).

5. A controller for an electric bicycle according to claim 3 or 4, wherein the acceleration power supply part (112,212) is adapted to perform feedback control.

6. A power unit for an electric bicycle comprising:
a pedal torque detecting part (57) that is adapted to detect pedal torque input to pedals (33,34);
an electric motor (60); and
the controller (100) for an electric bicycle according to any one of claims 1 to 5 that is adapted to control power supplied to the electric motor (60).

7. An electric bicycle comprising:
the power unit (40) for an electric bicycle according to claim 6; and
a wheel (22) that is adapted to be driven by the power unit (40).

## Patentansprüche

1. Eine Steuerung für ein Elektro-Fahrrad, die Motor-Moment, das durch einen Elektro-Motor (60) erzeugt ist, zu einem Rad (22), durch ein Leistungs-Übertragungs-Element überträgt, wobei eine Zeit-Verzögerung auftritt, um Spalte durch Bewegung mechanischer Elemente des Leistungs-Übertragungs-Elements nach dem Start des Elektro-Motors (60) zu eliminieren, die Steuerung umfasst:
einen Pedal-Moment-Abhängigen-Leistungs-Zufuhr-Teil (113, 214), der angepasst ist, um Pedal-Moment-Abhängige-Leistung zuzuführen, die in Erwiderung auf ein Signal eines Signal-Ausgangs von einem Pedal-Moment-Erfassungs-Teil (57), der Moment-Eingabe auf Pedale (33, 34) erfasst, geändert ist, zu dem Elektro-Motor (60);
einen Beschleunigungs-Leistungs-Zufuhr-Teil (112, 212), der angepasst ist, um Beschleunigungs-Leistung zu dem Elektro-Motor (60) in einem Zeit-Bereich (A1) nach dem Start des Elektro-Motors (60) und vor der Zeit (t3), zu der die Maximal-Spitze (Pk) in einem Signal-Ausgang von dem Pedal-Moment-Erfassungs-Teil (57) ausgebildet ist, während Pedale (33, 34) eine Umdrehung machen, nachdem Moment zu den Pedalen (33, 34) eingegeben ist, zuzuführen, die Beschleunigungs-Leistung ist größer als die Pedal-Moment-Abhängige-Leistung, die erzeugt ist, wenn die Maximal-Spitze (Pk) ausgebildet ist; und
einen Moderat-Leistungs-Zufuhr-Teil (112, 213), der angepasst ist, um eine Moderat-Leistung zu dem Elektro-Motor (60), in einem Zeit-Bereich (A2) nach dem Zeit-Bereich (A1), zu dem die Beschleunigungs-Leistung zugeführt ist, und vor der Zeit (t3), zu der die Maximal-Spitze (Pk) in dem Signal-Ausgang von dem Pedal-Moment-Erfassungs-Teil (57) ausgebildet ist, während die Pedale (33, 34) eine Umdrehung machen, nach dem Moment zu den Pedalen (33, 34) ausgegeben ist, zuzuführen, die Moderat-Leistung ist geringer als die Beschleunigungs-Leistung.

2. Eine Steuerung für ein Elektro-Fahrrad gemäß Anspruch 1, wobei der Moderat-Leistungs-Zufuhr-Teil (112, 213) angepasst ist, um die Moderat-Leistung kleiner als die Pedal-Moment-Abhängige-Leistung, die erzeugt ist, wenn die Maximal-Spitze (Pk) ausgebildet ist, zuzuführen.

3. Eine Steuerung für ein Elektro-Fahrrad gemäß Anspruch 1 oder 2, wobei der Moderat-Leistungs-Zufuhr-Teil (112, 213) angepasst ist, um die Moderat-Leistung entsprechend zu einem Signal-Ausgang von einem Erfassungs-Teil (58), der die Drehung des Leistungs-Übertragungs-Elements erfasst, und einem Signal-Ausgang von einem Erfassungs-Teil (61), der die Drehung des Elektro-Motors (60) erfasst, zuzuführen.

4. Eine Steuerung für ein Elektro-Fahrrad gemäß zu irgendeinem der Ansprüche 1 bis 3, wobei der Beschleunigungs-Leistungs-Zufuhr-Teil (112, 212) angepasst ist, um die Beschleunigungs-Leistung entsprechend zu einem Signal-Ausgang von einem Erfassungs-Teil (58), der die Drehung des Leistungs-Übertragungs-Elements erfasst, und einem Signal-Ausgang von einem Erfassungs-Teil (61), der die Drehung des Elektro-Motors (60) erfasst, zuzuführen.

5. Eine Steuerung für ein Elektro-Fahrrad gemäß Anspruch 3 oder 4, wobei der Beschleunigungs-Leistungs-Zufuhr-Teil (112, 212) angepasst ist, um eine Rückführ-Steuerung auszuführen.

6. Eine Leistungs-Einheit für ein Elektro-Fahrrad, die umfasst:
einen Pedal-Moment-Erfassungs-Teil (57), der angepasst ist, um Pedal-Moment-Eingabe zu Pedalen (33, 34) zu erfassen;
einen Elektro-Motor (60); und
die Steuerung (100) für ein Elektro-Fahrrad gemäß zu irgendeinem der Ansprüche 1 bis 5, die angepasst ist, um Leistung, die zu dem Elektro-Motor (60) zugeführt ist, zu steuern.

7. Ein Elektro-Fahrrad, das umfasst:
die Leistungs-Einheit (40) für ein Elektro-Fahrrad gemäß Anspruch 6; und
ein Rad (22), das angepasst ist, um durch die Leistungs-Einheit (40) angetrieben zu werden.

## Revendications

1. Contrôleur pour bicyclette électrique transmettant un couple moteur, qui est généré par un moteur électrique (60), à une roue (22) via un élément de transmission de puissance, dans lequel un décalage temporel se produit pour éliminer les intervalles en déplaçant des éléments mécaniques de l'élément de transmission de puissance après le démarrage du moteur électrique (60), le contrôleur comprenant :
une partie d'alimentation dépendant du couple de pédale (113, 214) adaptée pour fournir au moteur électrique (60) une alimentation dépendant du couple de pédale, qui est variée en réponse à une variation du signal fourni par une partie de détection de couple de pédale (57) qui détecte un couple fourni aux pédales (33, 34) ;
une partie d'alimentation de puissance d'accélération (112, 212) adaptée pour fournir une puissance d'accélération au moteur électrique (60) dans une plage temporelle (A1) qui suit le démarrage du moteur électrique (60) et qui précède le temps (t3) où le pic maximal (Pk) est formé dans un signal fourni par la partie de détection de couple de pédale (57) alors que les pédales (33, 34) effectuent une rotation après la fourniture du couple aux pédales (33, 34), la puissance d'accélération étant supérieure à la puissance dépendant du couple de pédale qui est générée quand le pic maximal (Pk) est formé ; et
une partie d'alimentation modérée (112, 213) adaptée pour alimenter de la puissance de modération au moteur électrique (60) dans une plage temporelle (A2) qui suit la plage temporelle (A1) où la puissance d'accélération est fournie et qui précède le temps (t3) où le pic maximal (Pk) est formé dans le signal fourni par la partie de détection de couple de pédale (57) alors que les pédales (33, 34) effectuent une rotation après la fourniture d'un couple aux pédales (33, 34), la puissance de modération étant inférieure à la puissance d'accélération.

2. Contrôleur pour bicyclette électrique selon la revendication 1, dans lequel la partie d'alimentation modérée (112, 213) est adaptée pour alimenter la puissance de modération, qui est inférieure à la puissance dépendant du couple de pédale qui est générée quand le pic maximal (Pk) est formé.

3. Contrôleur pour bicyclette électrique selon la revendication 1 ou 2, dans lequel la partie d'alimentation modérée (112, 213) est adaptée pour alimenter la puissance de modération correspondant à un signal fourni par une partie de détection (58) qui détecte la rotation de l'élément de transmission de puissance et à un signal fourni par une partie de détection (61) qui détecte la rotation du moteur électrique (60).

4. Contrôleur pour bicyclette électrique selon l'une quelconque des revendications 1 à 3, dans lequel la partie d'alimentation de puissance d'accélération (112, 212) est adaptée pour fournir la puissance d'accélération correspondant à un signal fourni par une partie de détection (58) qui détecte la rotation de l'élément de transmission de puissance et à un signal fourni par une partie de détection (61) qui détecte la rotation du moteur électrique (60).

5. Contrôleur pour bicyclette électrique selon la revendication 3 ou 4, dans lequel la partie d'alimentation de puissance d'accélération (112, 212) est adaptée pour mettre en oeuvre un contrôle de rétroaction.

6. Groupe moteur pour bicyclette électrique, comprenant :
une partie de détection de couple de pédale (57) qui est adaptée pour détecter un couple de pédale fourni aux pédales (33, 34) ;
un moteur électrique (60) ; et
le contrôleur (100) pour bicyclette électrique selon l'une quelconque des revendications 1 à 5 qui est adapté pour contrôler la puissance fournie au moteur électrique (60).

7. Bicyclette électrique comprenant :
le groupe moteur (40) pour bicyclette électrique selon la revendication 6 ; et
une roue (22) qui est adaptée pour être entraînée par le groupe moteur (40).
